(19) Europäisches Patentamt / European Patent Office / Office européen des brevets

(11) **EP 4 262 101 A1**

(12) **EUROPEAN PATENT APPLICATION**
published in accordance with Art. 153(4) EPC

(43) Date of publication:
**18.10.2023 Bulletin 2023/42**

(21) Application number: **20966410.1**

(22) Date of filing: **23.12.2020**

(51) International Patent Classification (IPC):
**H04B 7/06** (2006.01)

(52) Cooperative Patent Classification (CPC):
**H04B 7/06; Y02D 30/70**

(86) International application number:
**PCT/CN2020/138737**

(87) International publication number:
**WO 2022/133835 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **QIN, Xi
Shenzhen, Guangdong 518129 (CN)**

(74) Representative: **Gill Jennings & Every LLP
The Broadgate Tower
20 Primrose Street
London EC2A 2ES (GB)**

(54) **TRANSMITTER, RADAR AND VEHICLE**

(57)    This application discloses a transmitter, a radar, and a vehicle, and relates to the field of radars, which are commonly used in a scenario for various detection distances without reducing efficiency of power amplification in the transmitter. The transmitter includes: a signal transmitter, a first subchannel, a second subchannel, a combiner, and a transmit antenna. The signal transmitter is configured to transmit a constant envelope transmit signal. The first subchannel is configured to perform power amplification and phase shifting on the constant envelope transmit signal to output a first transmit signal. The second subchannel is configured to perform power amplification and phase shifting on the constant envelope transmit signal to output a second transmit signal. The combiner is configured to combine the first transmit signal and the second transmit signal, to output a combined transmit signal to the transmit antenna.

FIG. 4

EP 4 262 101 A1

**Description**

**TECHNICAL FIELD**

This application relates to the field of radars, and in particular, to a transmitter, a radar, and a vehicle.

**BACKGROUND**

Based on different detection distances of a radar, a transmitter is difficult to obtain higher transmission efficiency at different power levels, which further affects detection performance and power consumption.

**SUMMARY**

Embodiments of this application provide a transmitter, a radar, and a vehicle, to improve transmit efficiency of the transmitter.

To achieve the foregoing objectives, the following technical solutions are used in embodiments of this application.

According to a first aspect, a transmitter is provided, including: a signal transmitter, a first subchannel, a second subchannel, and a combiner. The signal transmitter is configured to transmit a constant envelope transmit signal. The first subchannel is configured to perform power amplification and phase shifting on the constant envelope transmit signal to output a first transmit signal. The second subchannel is configured to perform power amplification and phase shifting on the constant envelope transmit signal cto output a second transmit signal. The combiner is configured to combine the first transmit signal and the second transmit signal, to output a combined transmit signal to a transmit antenna.

According to the transmitter provided in this embodiment of this application, the signal transmitter is configured to transmit the constant envelope transmit signal, that is, an amplitude of the constant envelope transmit signal remains unchanged. The first subchannel and the second subchannel may separately perform power amplification and phase shifting on the constant envelope transmit signal. The combiner combines the first transmit signal output by the first subchannel and the second transmit signal output by the second subchannel, to output the combined transmit signal to the transmit antenna. Power of the combined transmit signal is related to a phase difference between the first transmit signal and the second transmit signal. Therefore, transmit power of the transmitter can be adjusted by adjusting the phase difference, to improve transmit efficiency of the transmitter.

In a possible implementation, the first subchannel includes a first phase shifter and a first power amplifier that are coupled to each other, the first phase shifter is configured to perform phase shifting on the constant envelope transmit signal, and the first power amplifier is configured to perform power amplification on the phase-shifted constant envelope transmit signal, to output the first transmit signal. This implementation provides a possible structure of the first subchannel, so that the phase shifting can be first performed on the constant envelope transmit signal and then the power amplification can be performed.

In a possible implementation, the first subchannel includes a first power amplifier and a first phase shifter that are coupled to each other, the first power amplifier is configured to perform power amplification on the constant envelope transmit signal, and the first phase shifter is configured to perform phase shifting on the power-amplified constant envelope transmit signal, to output the first transmit signal. This implementation provides a possible structure of the first subchannel, so that the power amplification can be first performed on the constant envelope transmit signal and then the phase shifting can be performed.

In a possible implementation, the first subchannel further includes a first variable gain amplifier coupled to the first power amplifier and the first phase shifter, and the first variable gain amplifier is configured to adjust a gain of the first subchannel. In other words, not only the power amplification and the phase shifting can be performed on each subchannel, but also a gain of each subchannel can be adjusted.

In a possible implementation, the second subchannel includes a second phase shifter and a second power amplifier that are coupled to each other, the second phase shifter is configured to perform phase shifting on the constant envelope transmit signal, and the second power amplifier is configured to perform power amplification on the phase-shifted constant envelope transmit signal, to output the second transmit signal. This implementation provides a possible structure of the second subchannel, so that the phase shifting can be first performed on the constant envelope transmit signal and then the power amplification can be performed.

In a possible implementation, the second subchannel includes a second power amplifier and a second phase shifter that are coupled to each other, the second power amplifier is configured to perform power amplification on the constant envelope transmit signal, and the second phase shifter is configured to perform phase shifting on the power-amplified constant envelope transmit signal, to output the second transmit signal. This implementation provides a possible structure of the second subchannel, so that the power amplification can be first performed on the constant envelope transmit signal and then the phase shifting can be performed.

In a possible implementation, the second subchannel further includes a second variable gain amplifier coupled to the second power amplifier and the second phase shifter, and the second variable gain amplifier is configured to adjust a gain of the second subchannel. In other words, not only the power amplification and the phase shifting can be performed on each subchannel, but also a gain of each subchannel can be adjusted.

In a possible implementation, the power amplification of the first subchannel and the second subchannel is in a saturated output state. In this case, efficiency of the power amplification of each subchannel is the highest.

In a possible implementation, the constant envelope transmit signal is a monophonic signal.

In a possible implementation, when the transmitter is used in a long-range radar, a phase difference between the first transmit signal and the second transmit signal is A; when the transmitter is used in a short-range radar, the phase difference between the first transmit signal and the second transmit signal is B; when the transmitter is used in a middle-range radar, the phase difference between the first transmit signal and the second transmit signal is C; and A<C<B. In other words, the phase difference between the first transmit signal and the second transmit signal may be adjusted, that is, the transmitter may be used in the long-range radar, the middle-range radar, and the short-range radar.

In a possible implementation, the first subchannel and the second subchannel have a same structure.

In a possible implementation, the signal transmitter includes an oscillator, a phase detector, and a loop filter, the oscillator is configured to generate the constant envelope transmit signal, the phase detector is configured to input a reference signal and the constant envelope transmit signal and output a first signal related to a phase difference between the reference signal and the constant envelope transmit signal, and the loop filter is configured to filter the first signal and output the first signal to the oscillator. This implementation provides a possible form of the signal transmitter.

In a possible implementation, the transmitter further includes a frequency multiplier and a plurality of drivers. The transmitter includes the signal transmitter, a plurality of transmit channels, and a plurality of transmit antennas. Each of the transmit channels includes the first subchannel, the second subchannel, and the combiner. The transmitter further includes a frequency multiplier and a plurality of drivers, an output end of the signal transmitter is coupled to an input end of the frequency multiplier, and an output end of the frequency multiplier is coupled to an input end of the first subchannel and an input end of the second subchannel of the plurality of transmit channels through the plurality of drivers. For each of the transmit channels, an output end of the first subchannel and an output end of the second subchannel are coupled to an input end of the combiner, and an output end of the combiner is coupled to one transmit antenna of the plurality of transmit antennas. The transmitter can be used in a multi-antenna radar.

According to a second aspect, a signal transmission method is provided, applied to the transmitter according to the first aspect or any implementation of the first aspect. The method includes: A signal transmitter of the transmitter transmits a constant envelope transmit signal; a first subchannel of the transmitter performs power amplification and phase shifting on the constant envelope transmit signal to output a first transmit signal, where the power amplification of the first subchannel is in a saturated output state; a second subchannel of the transmitter performs power amplification and phase shifting on the constant envelope transmit signal to output a second transmit signal, where the power amplification of the second subchannel is in the saturated output state; and the combiner of the transmitter combines the first transmit signal and the second transmit signal to output a combined transmit signal to a transmit antenna of the transmitter.

In a possible implementation, that the first subchannel of the transmitter performs power amplification and phase shifting on the constant envelope transmit signal to output the first transmit signal includes: A first phase shifter of the first subchannel performs phase shifting on the constant envelope transmit signal, and a first power amplifier of the first subchannel performs power amplification on the phase-shifted constant envelope transmit signal, to output the first transmit signal.

In a possible implementation, that the first subchannel of the transmitter performs power amplification and phase shifting on the constant envelope transmit signal to output the first transmit signal includes: The first power amplifier of the first subchannel performs power amplification on the constant envelope transmit signal, and the first phase shifter of the first subchannel performs phase shifting on the power-amplified constant envelope transmit signal, to output the first transmit signal.

In a possible implementation, the method further includes: A first variable gain amplifier of the first subchannel adjusts a gain of the first subchannel.

In a possible implementation, that the second subchannel of the transmitter performs power amplification and phase shifting on the constant envelope transmit signal to output the second transmit signal includes: A second phase shifter of the second subchannel performs phase shifting on the constant envelope transmit signal, and a second power amplifier of the second subchannel performs power amplification on the phase-shifted constant envelope transmit signal, to output the second transmit signal.

In a possible implementation, that the second subchannel of the transmitter performs power amplification and phase shifting on the constant envelope transmit signal to output the second transmit signal includes: The second power amplifier of the second subchannel performs power amplification on the constant envelope transmit signal, and the second phase shifter of the second subchannel performs phase shifting on the power-amplified constant envelope transmit signal, to output the second transmit signal.

In a possible implementation, the method further includes: A second variable gain amplifier of the second subchannel adjusts a gain of the second subchannel.

In a possible implementation, the power amplification of the first subchannel and the second subchannel is in a saturated output state.

In a possible implementation, the constant envelope transmit signal is a monophonic signal.

In a possible implementation, when the transmitter is used in a long-range radar, a phase difference between the first transmit signal and the second transmit signal is A; when the transmitter is used in a short-range radar, the phase difference between the first transmit signal and the second transmit signal is B; when the transmitter is used in a middle-range radar, the phase difference between the first transmit signal and the second transmit signal is C; and A<C<B.

According to a third aspect, a radar is provided, including the transmitter according to the first aspect or any implementation of the first aspect and a receiver. The receiver is configured to receive a signal that is transmitted by the transmitter and that is reflected by a target.

In a possible implementation, the receiver includes: a receive antenna, a low noise amplifier, a frequency mixer, a low-pass filter, and an analog-to-digital converter. An output end of a waveform generator of the transmitter is coupled to a first input end of the frequency mixer. The receive antenna is coupled to an input end of the low noise amplifier, and an output end of the low noise amplifier is coupled to a second input end of the frequency mixer. An output end of the frequency mixer is coupled to an input end of the low-pass filter, an output end of the low-pass filter is coupled to an input end of the analog-to-digital converter, and the analog-to-digital converter is configured to output a radar detection signal.

According to a fourth aspect, a radar is provided, including a transmitter and a receiver. The transmitter includes: a signal transmitter, a first subchannel, a second subchannel, a combiner, and a transmit antenna. The signal transmitter is configured to transmit a constant envelope transmit signal. The first subchannel is configured to perform power amplification and phase shifting on the constant envelope transmit signal to output a first transmit signal. The second subchannel is configured to perform power amplification and phase shifting on the constant envelope transmit signal to output a second transmit signal. The combiner is configured to combine the first transmit signal and the second transmit signal, to output a combined transmit signal to the transmit antenna. The receiver includes: a receive antenna, a low noise amplifier, a frequency mixer, a low-pass filter, and an analog-to-digital converter. An output end of a waveform generator of the transmitter is coupled to a first input end of the frequency mixer. The receive antenna is coupled to an input end of the low noise amplifier, and an output end of the low noise amplifier is coupled to a second input end of the frequency mixer. An output end of the frequency mixer is coupled to an input end of the low-pass filter, an output end of the low-pass filter is coupled to an input end of the analog-to-digital converter, and the analog-to-digital converter is configured to output a radar detection signal.

According to a fifth aspect, a vehicle is provided, including the radar according to the third aspect or the fourth aspect and a driving mechanism.

According to a sixth aspect, a computer-readable storage medium is provided. The computer-readable storage medium stores a computer program. When the computer-readable storage medium runs on a computer, the computer is enabled to perform the method according to the second aspect and any implementation of the second aspect.

According to a seventh aspect, a computer program product including instructions is provided. When the instructions run on a computer or a processor, the computer or the processor is enabled to perform the method according to the second aspect and any implementation of the second aspect.

For technical effects of the second aspect to the seventh aspect, refer to technical effects of the first aspect and any implementation of the first aspect. Details are not repeated herein.

**BRIEF DESCRIPTION OF DRAWINGS**

FIG. 1 is a schematic diagram 1 of a structure of a radar according to an embodiment of this application;
FIG. 2 is a schematic diagram 2 of a structure of a radar according to an embodiment of this application;
FIG. 3 is a schematic diagram 3 of a structure of a radar according to an embodiment of this application;
FIG. 4 is a schematic diagram 4 of a structure of a radar according to an embodiment of this application;
FIG. 5 is a schematic diagram of combining transmit signals of two subchannels of a transmitter according to an embodiment of this application;
FIG. 6 is a schematic diagram 5 of a structure of a radar according to an embodiment of this application;
FIG. 7 is a schematic diagram 6 of a structure of a radar according to an embodiment of this application;
FIG. 8 is a schematic diagram 7 of a structure of a radar according to an embodiment of this application;
FIG. 9 is a schematic diagram 8 of a structure of a radar according to an embodiment of this application;

FIG. 10 is a schematic diagram of a structure of a signal transmitter according to an embodiment of this application;

FIG. 11 is a schematic diagram of a structure of a transmitter according to an embodiment of this application;

FIG. 12 is a schematic diagram of combining transmit signals of a plurality of transmit channels according to an embodiment of this application; and

FIG. 13 is a schematic diagram of a structure of a vehicle according to an embodiment of this application.

## DESCRIPTION OF EMBODIMENTS

Based on different detection distances of radars, the radars may be classified into long-range radars (long-range radar, LRR), middle-range radars (mid-range radar, MRR), and short-range radars (short-range radar, SRR). A detection distance of the LRR can reach 280 meters, a detection distance of the MRR can reach 120 meters, and a detection distance of the SRR can reach 30 meters. The LRR is a narrowband radar with a narrow detection range having a spatial resolution of about 0.5m, and is usually used for adaptive cruise of vehicles. The LRR and the MRR are broadband radars with a wide detection range having a spatial resolution at a granularity of centimeters, and are usually used for detection of ambient environments.

In scenarios such as vehicle radar, wireless gesture recognition, and vital sign monitoring, a target is usually close to a radar. Because a round-trip-delay (round-trip-delay, RTD) of a signal is short, a pulse radar cannot work normally. Therefore, a frequency modulated continuous wave (frequency modulated continuous wave, FMCW) radar is used instead of the pulse radar in a scenario in which the radar is close to the target.

In the FMCW radar, a transmit signal is modulated based on a frequency (or a phase), and a distance between the target and the radar is measured based on a phase difference or a frequency difference between the transmit signal and a receive signal.

In an example of a transmit signal with a linear frequency modulated (linear frequency modulated, LFM) waveform, an instantaneous frequency of the waveform increases or decreases linearly with time. Because the signal sounds like birdsong after being converted into audio, the signal is also referred to as a chirp. The frequency changes linearly in a wide range, and the distance between the target and the radar is directly proportional to the frequency difference. Therefore, the distance between the target and the radar can be determined based on the frequency difference.

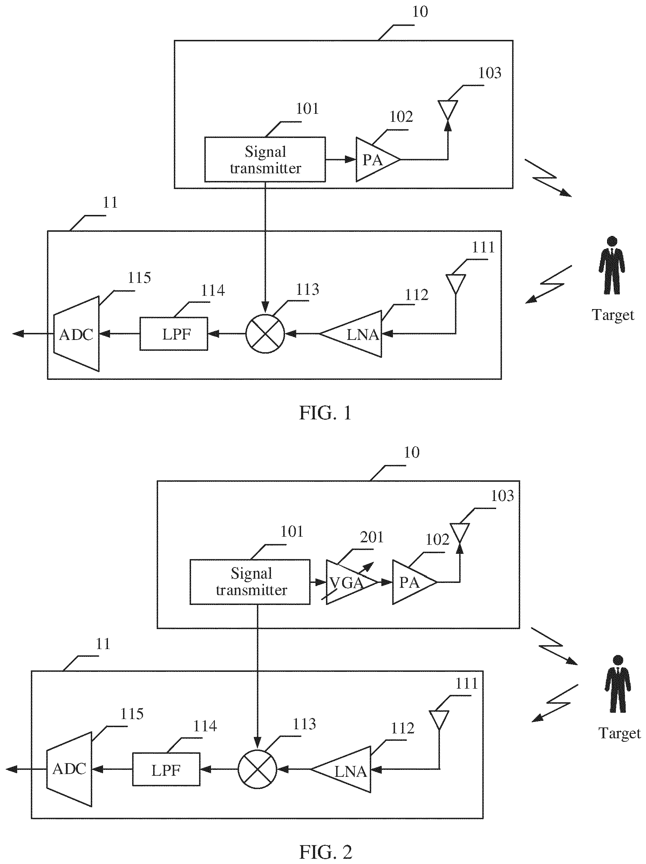

FIG. 1 shows a structure of an FMCW radar. The radar includes: a transmitter 10 and a receiver 11. The transmitter 10 includes a signal transmitter 101, a power amplifier (power amplifier, PA) 102, and a transmit antenna 103. The receiver includes: a receive antenna 111, a low noise amplifier (low noise amplifier, LNA) 112, a frequency mixer 113, a low-pass filter (low-pass filter, LPF) 114, and an analog-to-digital converter (analog-to-digital converter, ADC) 115.

For the transmitter, an output end of the signal transmitter 101 is coupled to an input end of the PA 102, and the output end of the signal transmitter 101 is further coupled to a first input end of the frequency mixer 113. An output end of the PA 102 is coupled to the transmit antenna 103.

The signal transmitter 101 is configured to generate a radar detection waveform of a transmit signal, for example, an LFM waveform. The PA 102 is configured to amplify the radar detection waveform. The transmit antenna 103 is configured to transmit the radar detection waveform in a form of a radio frequency, that is, form the transmit signal.

For the receiver, the receive antenna 111 is coupled to an input end of the LNA 112, an output end of the LNA 112 is coupled to a second input end of the frequency mixer 113, an output end of the frequency mixer 113 is coupled to an input end of the LPF 114, and an output end of the LPF 114 is coupled to an input end of the ADC 115.

The receiver is configured to receive a signal that is transmitted by the transmitter and that is reflected by a target. The receive antenna 111 is configured to receive the reflected signal from the target. The LNA 112 is configured to amplify the reflected signal. The frequency mixer 113 is configured to perform frequency mixing on the reflected signal and the transmit signal to obtain a frequency-mixed signal. The LPF 114 is configured to filter out a high-frequency signal in the frequency-mixed signal. The ADC 115 is configured to convert an analog frequency-mixed signal into a digital signal (that is, a radar detection signal) for further analysis.

When a waveform of the reflected signal is an LFM waveform, the reflected signal may be modeled as a sine wave at the output end of the frequency mixer 113, and a frequency of the sine wave is directly proportional to a round-trip-delay (round-trip-delay, RTD). The sine wave is $s(t)$ shown in formula 1:

$$s(t) = e^{j2\pi(f_c t + 0.5\gamma t^2)} \qquad \text{formula 1}$$

where $f_c$ is a center frequency of the LFM waveform, $\gamma$ is a center frequency of a chirp rate (that is, a chirp change rate), and $f_c + \gamma t$ is an instantaneous frequency that increases linearly with time $t$. The receive signal may be modeled as $x(t)$ shown in formula 2 relative to the reflected signal:

$$x(t) = \beta s(t - \tau) = \beta e^{j2\pi(f_c(t-\tau)+0.5\gamma(t-\tau)^2)} \qquad \text{formula 2}$$

where $\beta$ is an amplitude, and $\tau$ is a delay.

The transmit signal $s(t)$ and the reflected signal $x(t)$ may be combined at the frequency mixer 113 to obtain $y(t)$ shown in formula 3:

$$y(t) = s(t) * x(t) = \beta e^{j2\pi(f_c\tau-0.5\gamma\tau^2)} e^{j2\pi\gamma t\tau} \qquad \text{formula 3}$$

where $y(t)$ is a sine wave of time $t$. By applying a fast Fourier transform (fast Fourier transform, FFT) to the output of the ADC 115, the delay $\tau$ may be estimated, and the distance D between the target and the radar may be obtained shown in formula 4.

$$D = \tau c / 2 \qquad \text{formula 4}$$

where $c$ is a speed of light.

The LRR, the MRR, and the SRR have different requirements on transmit power of the transmitter. The transmit power of the transmitter of the LRR is greater than the transmit power of the transmitter of the MRR, and the transmit power of the transmitter of the MRR is greater than the transmit power of the transmitter of the SRR. If the transmitter of the LRR is directly used in the SRR, much power is reduced, and efficiency of a power amplifier (power amplifier, PA) in the transmitter deteriorates seriously. If different transmitters are developed for the LRR, the MRR, and the SRR, a project periodicity and product maintenance difficulty are increased.

In order to design a transmitter that can be used in all the LRR, the MRR, and the SRR, in a possible implementation, as shown in FIG. 2, a variable gain amplifier (variable gain amplifier, VGA) 201 may be added between the PA 102 and the signal transmitter 101 of the transmitter of the LRR, and the transmitter is used in radars of different types by adjusting a gain of the VGA 201. However, efficiency of the PA 102 is usually maximum at maximum output power. When the transmitter of the LRR is used in the MRR or the SRR, because the gain of the VGA needs to be reduced, both input power and output power of the PA 102 are reduced, and the efficiency of the PA 102 is reduced.

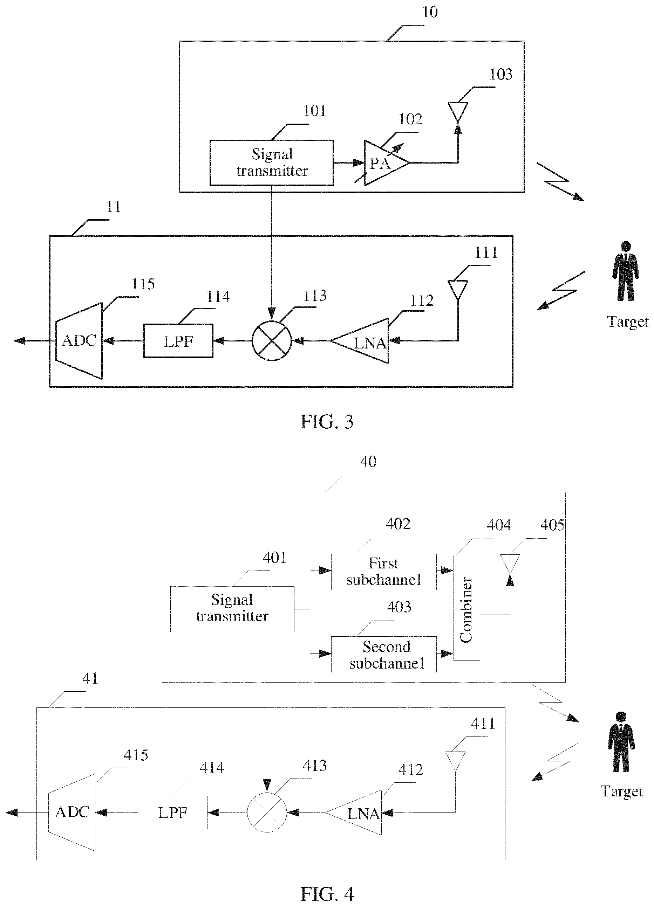

In another possible implementation, as shown in FIG. 3, the PA 102 may be set to a PA of which output power can be adjusted. Similarly, the efficiency of the PA 102 is usually maximum at the maximum output power. When the output power of the PA 102 is reduced, the efficiency of the PA 102 is also reduced.

Therefore, in order to design a common radar used in scenarios for various detection distances and improve transmit efficiency of the transmitter, an embodiment of this application provides another radar, and a transmitter of the radar includes a signal transmitter, two channels, and a combiner. Each channel is configured to perform power amplification and phase shifting on a constant envelope transmit signal transmitted by the signal transmitter, and power amplification of the two channels can operate in a saturated output state, so that efficiency of the power amplification is not reduced. The combiner combines signals output by the two channels and then transmits a combined signal through an antenna. Transmit power of the radar is adjusted by adjusting phases of the two channels, so that the radar can be used in different scenarios such as an LRR, an MRR, and an SRR without reducing the efficiency of the power amplification in the transmitter.

As shown in FIG. 4, the radar includes: a transmitter 40 and a receiver 41. The transmitter 40 includes a signal transmitter 401, a first subchannel 402, a second subchannel 403, a combiner 404, and a transmit antenna 405. The receiver 41 includes a receive antenna 411, an LNA 412, a frequency mixer 413, an LPF 414, and an ADC 415. For functions of the components in the receiver 41, refer to the foregoing descriptions, and details are not repeated herein again. The transmitter 40 is configured to perform the following signal transmission method.

The signal transmitter 401 is configured to transmit a constant envelope transmit signal, where a constant envelope means that an amplitude is constant. The constant envelope transmit signal may be a frequency-modulated monophonic signal. For example, for FMCW modulation, a transmit signal is required to be a constant envelope, and a frequency is modulated.

The first subchannel 402 is configured to perform power amplification and phase shifting on the constant envelope transmit signal to output a first transmit signal. The power amplification of the first subchannel 402 is in a saturated output state.

The second subchannel 403 is configured to perform power amplification and phase shifting on the constant envelope transmit signal to output a second transmit signal. The power amplification of the second subchannel 403 is in the saturated output state.

The first subchannel 402 and the second subchannel 403 may have a same structure or different structures.

Because the constant envelope transmit signal is the constant envelope, that is, the amplitude is constant, the power amplification of each subchannel may be configured to be in the saturated output state based on the amplitude.

The combiner 404 is configured to combine the first transmit signal and the second transmit signal, to output a combined transmit signal to the transmit antenna 405.

The phase shifting described above refers to changing a phase. The combining refers to combining transmit signals with reference to phases. Because phases of the transmit signals output by the two subchannels may be different, the transmit signals may be enhanced or cancelled during combination, and correspondingly, power of the combined transmit signal is also increased or decreased, so that the power is changed by adjusting the phase.

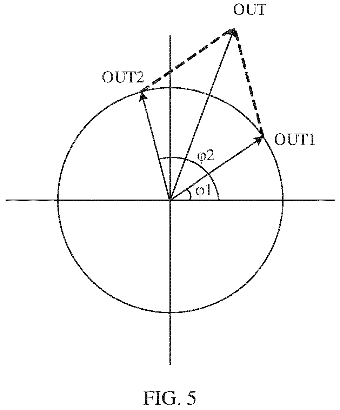

As shown in FIG. 5, it is assumed that amplitudes of a first transmit signal OUT1 and a second transmit signal OUT2 are the same, a phase of the first transmit signal OUT1 is $\varphi 1$, a phase of the second transmit signal OUT2 is $\varphi 2$, a phase of a transmit signal OUT combined by the combiner 404 is $\theta=(\varphi 1+\varphi 2)/2$, and power of the transmit signal OUT is

$$P = 2\frac{V_0^2}{R_L}cos^2\frac{\varphi 1-\varphi 2}{2}$$

. $V_0$ represents the amplitude of the first transmit signal OUT1 or the second transmit signal OUT2, and $R_L$ represents a load resistance. That is, the power P of the transmit signal OUT depends on a phase difference $\varphi 1-\varphi 2$ between the first transmit signal and the first transmit signal. A smaller phase difference indicates larger power P of the transmit signal OUT, and a larger phase difference indicates smaller power P of the transmit signal OUT. When the phase difference is zero, the power P of the transmit signal OUT reaches the maximum.

In other words, when the transmitter is used in a long-range radar (that is, the radar is the long-range radar), the phase difference between the first transmit signal and the second transmit signal is A; when the transmitter is used in a middle-range radar (that is, the radar is the middle-range radar), the phase difference between the first transmit signal and the second transmit signal is B; when the transmitter is used in a short-range radar (that is, the radar is the short-range radar), the phase difference between the first transmit signal and the second transmit signal is C; and A<B<C.

In the radar and the transmitter provided in this embodiment of this application, the signal transmitter is configured to transmit the constant envelope transmit signal, that is, an amplitude of the constant envelope transmit signal remains unchanged. The first subchannel and the second subchannel may separately perform power amplification and phase shifting on the constant envelope transmit signal. The combiner combines the first transmit signal output by the first subchannel and the second transmit signal output by the second subchannel, to output the combined transmit signal to the transmit antenna. Power of the combined transmit signal is related to a phase difference between the first transmit signal and the second transmit signal. Therefore, transmit power of the transmitter can be adjusted by adjusting the phase difference, so that the two subchannels can perform power amplification with maximum efficiency, to improve transmit efficiency of the transmitter.

That is, a frequency-modulated constant envelope transmit signal is input through two subchannels, and the power amplification of the two subchannels operates in the saturated output state. Then, a power level of the transmit signal is adjusted through phase adjustment and combination, to implement a function similar to that of the VGA, and ensure that the power amplifier always operates in a high-efficiency state.

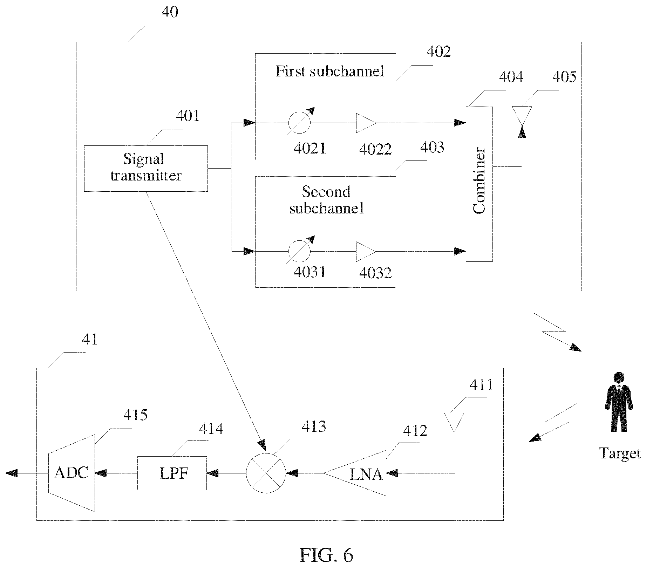

In a possible implementation, as shown in FIG. 6, the first subchannel 402 includes a first phase shifter 4021 and a first power amplifier (PA) 4022 that are coupled to each other, the first phase shifter 4021 is configured to perform phase shifting on the constant envelope transmit signal, and the first power amplifier 4022 is configured to perform power amplification on the phase-shifted constant envelope transmit signal, to output the first transmit signal.

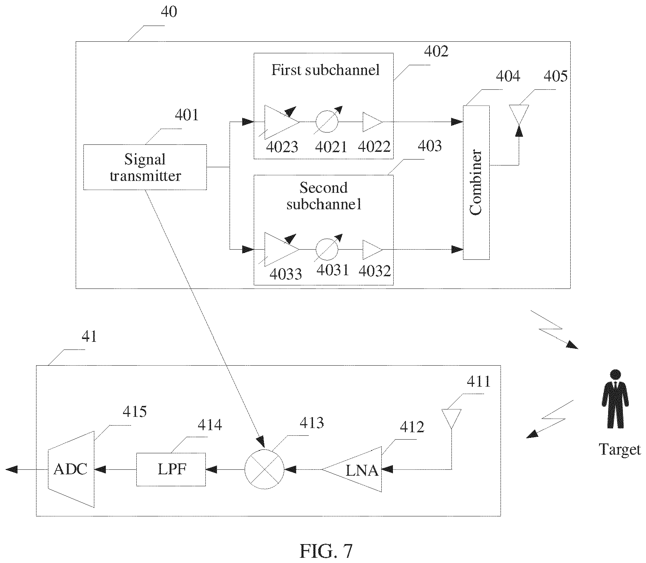

Optionally, as shown in FIG. 7, the first subchannel 402 further includes a first variable gain amplifier 4023 coupled to the first power amplifier 4022 and the first phase shifter 4021, and the first variable gain amplifier 4023 is configured to adjust a gain of the first subchannel 402.

The second subchannel 403 includes a second phase shifter 4031 and a second power amplifier 4032 that are coupled to each other, the second phase shifter 4031 is configured to perform phase shifting on the constant envelope transmit signal, and the second power amplifier 4032 is configured to perform power amplification on the phase-shifted constant envelope transmit signal, to output the second transmit signal.

Optionally, as shown in FIG. 7, the second subchannel 403 further includes a second variable gain amplifier 4033 coupled to the second power amplifier 4032 and the second phase shifter 4031, and the first variable gain amplifier 4033 is configured to adjust a gain of the second subchannel 403.

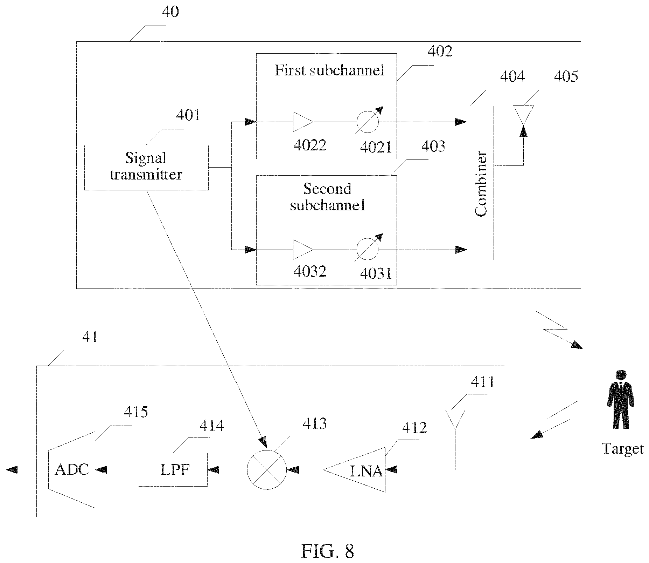

In another possible implementation, as shown in FIG. 8, the first subchannel 402 includes a first power amplifier 4022 and a first phase shifter 4021 that are coupled to each other, the first power amplifier 4022 is configured to perform power amplification on the constant envelope transmit signal, and the first phase shifter 4021 is configured to perform phase shifting on the power-amplified constant envelope transmit signal, to output the first transmit signal.

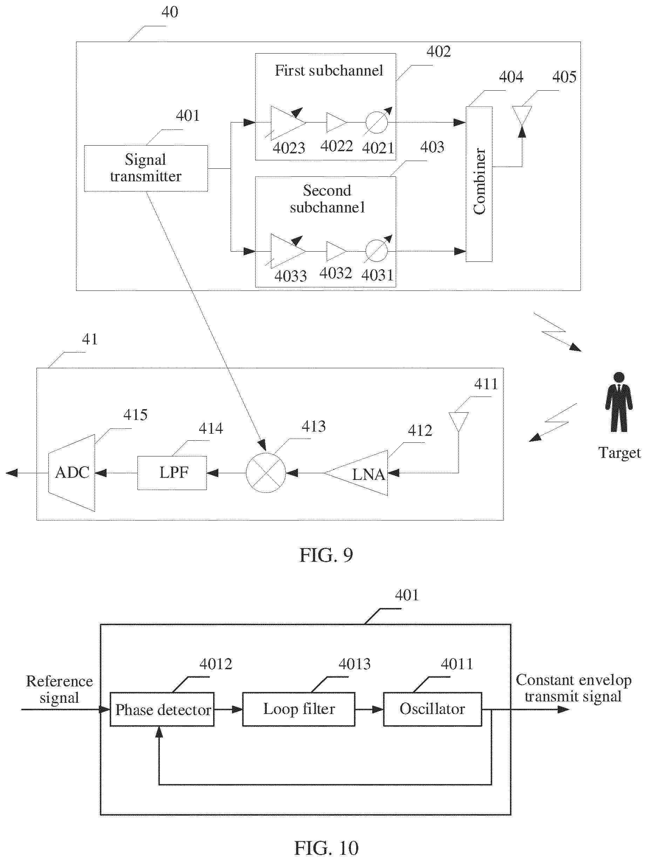

Optionally, as shown in FIG. 9, the first subchannel 402 further includes a first variable gain amplifier 4023 coupled to the first power amplifier 4022 and the first phase shifter 4021, and the first variable gain amplifier 4023 is configured to adjust a gain of the first subchannel 402.

The second subchannel 403 includes a second power amplifier 4032 and a second phase shifter 4031 that are coupled to each other, the second power amplifier 4032 is configured to perform power amplification on the constant envelope transmit signal, and the second phase shifter 4031 is configured to perform phase shifting on the power-amplified constant envelope transmit signal, to output the second transmit signal.

Optionally, as shown in FIG. 9, the second subchannel 403 further includes a second variable gain amplifier 4033 coupled to the second power amplifier 4032 and the second phase shifter 4031, and the first variable gain amplifier 4033 is configured to adjust a gain of the second subchannel 403.

A structure of the signal transmitter 401 is not limited in this application. In a possible implementation, as shown in FIG. 10, the signal transmitter 401 may be a phase-locked loop and includes an oscillator 4011, a phase detector 4012, and a loop filter 4013. The phase detector 4012 is configured to input a reference signal and the constant envelope transmit signal and output a first signal related to a phase difference between the reference signal and the constant envelope transmit signal. For example, a larger phase difference indicates a higher voltage of the first signal. The loop filter 4013 is configured to filter the first signal and output the first signal to the oscillator 4011, to drive the oscillator 4011 to generate the constant envelope transmit signal.

The first subchannel and the second subchannel are used as one transmit channel. The transmitter provided in this embodiment of this application may include a plurality of transmit channels, that is, directivity or a detection resolution of the radar is improved in a form of a multi-antenna array.

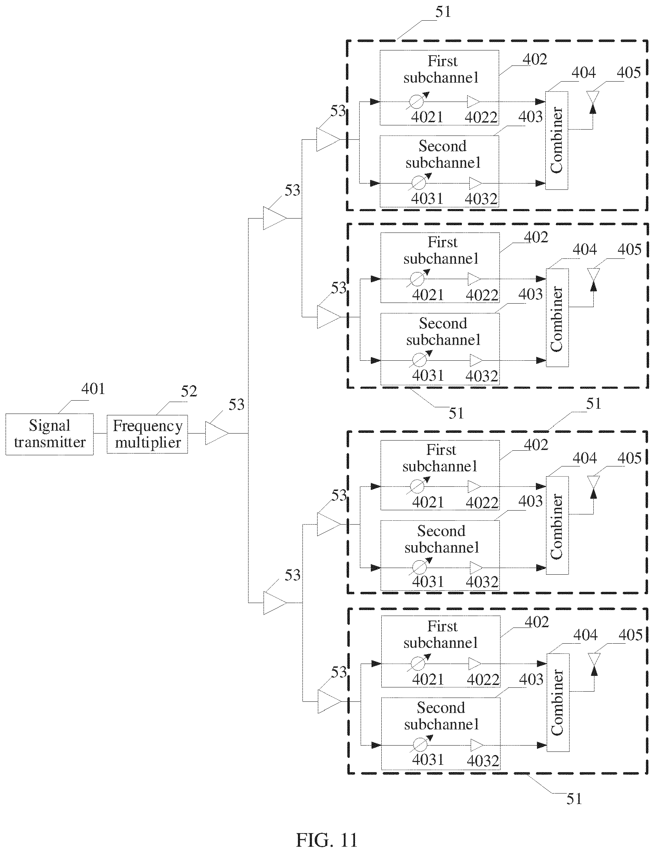

For example, as shown in FIG. 11, the transmitter may include the signal transmitter 401, a plurality of (for example, four) transmit channels 51, and a plurality of transmit antennas 405. Each transmit channel includes the first subchannel 402, the second subchannel 403, and the combiner 404.

Optionally, the transmitter further includes a frequency multiplier 52 and a plurality of drivers 53, an output end of the signal transmitter 401 is coupled to an input end of the frequency multiplier 52, and an output end of the frequency multiplier 52 is coupled to an input end of the first subchannel 402 and an input end of the second subchannel 403 of the plurality of transmit channels 51 through the plurality of drivers 53. For each of the transmit channels 51, an output end of the first subchannel 402 and an output end of the second subchannel 403 are coupled to an input end of the combiner 404, and an output end of the combiner 404 is coupled to one transmit antenna 405 of the plurality of transmit antennas 405. The frequency multiplier 52 is configured to perform frequency multiplication on the constant envelope transmit signal transmitted by the signal transmitter 401, and transmit the constant envelope transmit signal to each transmit channel through the driver 53. The driver 53 is configured to improve a driving capability of the signal transmitter 401.

In some high-frequency (for example, 77 GHz) radars, the signal transmitter 401 cannot directly transmit a high-frequency signal, but transmits a constant envelope transmit signal with a low frequency and then performs frequency multiplication by using the frequency multiplier 52. For example, the signal transmitter 401 transmits a constant envelope transmit signal of 19.25 GHz, and then performs frequency quadrupling by using the frequency multiplier 52 to enable the frequency of the constant envelope transmit signal to reach 77 GHz.

There may be a long path from the frequency multiplier 52 to the transmit channel, and the driver 53 is configured to improve a driving capability of a signal source, to avoid an excessively small signal amplitude after a signal reaches the transmit channel.

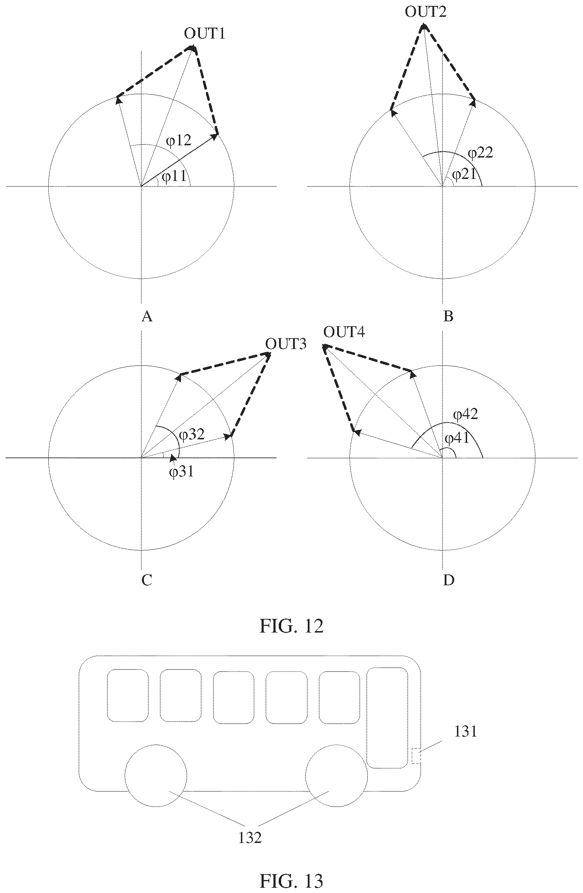

As shown in A in FIG. 12, it is assumed that a phase of a first transmit signal output by a first subchannel of the 1st transmit channel is $\varphi 11$, and a phase of a second transmit signal output by a second subchannel of the 1st transmit channel is $\varphi 12$. In this case, a phase of a transmit signal OUT1 of the 1st transmit channel is $\theta 1 = (\varphi 11 + \varphi 12)/2$, and power is $$P = 2 \frac{V_0^2}{R_L} cos^2 \frac{\varphi 11 - \varphi 12}{2}$$ , where $V_0$ represents an amplitude of the first transmit signal of the first subchannel or the second transmit signal of the second subchannel, and $R_L$ represents a load resistance.

As shown in B in FIG. 12, it is assumed that a phase of a first transmit signal output by a first subchannel of the 2rd transmit channel is $\varphi 21$, and a phase of a second transmit signal output by a second subchannel of the 2rd transmit channel is $\varphi 22$. In this case, a phase of a transmit signal OUT2 of the 1st transmit channel is $\theta 2 = (\varphi 21 + \varphi 22)/2$,

and power is $$P = 2 \frac{V_0^2}{R_L} cos^2 \frac{\varphi 21 - \varphi 22}{2}$$ , where $V_0$ represents an amplitude of the first transmit signal of the first subchannel or the second transmit signal of the second subchannel, and $R_L$ represents a load resistance.

As shown in C in FIG. 12, it is assumed that a phase of a first transmit signal output by a first subchannel of the 3rd transmit channel is $\varphi 31$, and a phase of a second transmit signal output by a second subchannel of the 3rd transmit channel is $\varphi 32$. In this case, a phase of a transmit signal OUT3 of the 1st transmit channel is $\theta 3 = (\varphi 31 + \varphi 32)/2$,

and power is $P = 2\dfrac{V_0^2}{R_L}cos^2\dfrac{\varphi31-\varphi32}{2}$ , where $V_0$ represents an amplitude of the first transmit signal of the first subchannel or the second transmit signal of the second subchannel, and $R_L$ represents a load resistance.

As shown in D in FIG. 12, it is assumed that a phase of a first transmit signal output by a first subchannel of the 4th transmit channel is $\varphi41$, and a phase of a second transmit signal output by a second subchannel of the 4th transmit channel is $\varphi42$. In this case, a phase of a transmit signal OUT4 of the 1st transmit channel is $\theta4=(\varphi41+\varphi42)/2$, and power

is $P = 2\dfrac{V_0^2}{R_L}cos^2\dfrac{\varphi41-\varphi42}{2}$ , where $V_0$ represents an amplitude of the first transmit signal of the first subchannel or the second transmit signal of the second subchannel, and $R_L$ represents a load resistance.

Due to a systematic error and a random error in a manufacturing process, there is a mismatch between the transmit channels. As a result, power or a phase of an output signal of each transmit channel is different. A phase shift angle of two subchannels of the transmit channel may be adjusted, to adjust a phase $\theta$ and output power P of a transmit signal OUT of each transmit channel, so that the phases and power of the output signals of the transmit channels are aligned. This process is a calibration process and may be performed at delivery or each startup, or may be performed in a working gap by using a spare time.

As shown in FIG. 13, an embodiment of this application further provides a vehicle, including the foregoing radar 131 and a driving mechanism 132. A power apparatus is configured to drive the vehicle to travel. The vehicle may be a conventional fuel vehicle such as a fuel vehicle and a gas vehicle, or may be a new energy vehicle such as an electric vehicle, a fuel cell vehicle, or a hydrogen powered vehicle.

An embodiment of this application further provides a computer-readable storage medium. The computer-readable storage medium stores a computer program. When the computer-readable storage medium runs on a computer or a processor, the computer or the processor is enabled to perform the foregoing signal transmission method.

An embodiment of this application further provides a computer program product including instructions. When the instructions run on a computer or a processor, the computer or the processor is enabled to perform the foregoing signal transmission method.

For technical effects of the vehicle, the computer readable storage medium, and the computer program product provided in embodiments of this application, refer to the foregoing descriptions of the transmitter and the radar. Details are not repeated herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiments are merely an example. For example, the unit division is merely logical function division and can be other division in actual implementation. For example, multiple units or components can be combined or integrated into another system, or some features can be ignored or not performed. In addition, the displayed or discussed mutual couplings or direct couplings or communication connections are implemented through some interfaces. The indirect couplings or communication connections between the devices or units may be implemented in electronic, mechanical or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

All or a part of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.


**Claims**

1.  A transmitter, comprising: a signal transmitter, a first subchannel, a second subchannel, and a combiner, wherein

    the signal transmitter is configured to transmit a constant envelope transmit signal;
    the first subchannel is configured to perform power amplification and phase shifting on the constant envelope transmit signal to output a first transmit signal;
    the second subchannel is configured to perform power amplification and phase shifting on the constant envelope transmit signal to output a second transmit signal; and
    the combiner is configured to combine the first transmit signal and the second transmit signal, to output a combined transmit signal to a transmit antenna.

2.  The transmitter according to claim 1, wherein the first subchannel comprises a first phase shifter and a first power amplifier that are coupled to each other, the first phase shifter is configured to perform phase shifting on the constant envelope transmit signal, and the first power amplifier is configured to perform power amplification on the phase-shifted constant envelope transmit signal, to output the first transmit signal.

3.  The transmitter according to claim 1, wherein the first subchannel comprises a first power amplifier and a first phase shifter that are coupled to each other, the first power amplifier is configured to perform power amplification on the constant envelope transmit signal, and the first phase shifter is configured to perform phase shifting on the power-amplified constant envelope transmit signal, to output the first transmit signal.

4.  The transmitter according to claim 2 or 3, wherein the first subchannel further comprises a first variable gain amplifier coupled to the first power amplifier and the first phase shifter, and the first variable gain amplifier is configured to adjust a gain of the first subchannel.

5.  The transmitter according to any one of claims 1 to 4, wherein the second subchannel comprises a second phase shifter and a second power amplifier that are coupled to each other, the second phase shifter is configured to perform phase shifting on the constant envelope transmit signal, and the second power amplifier is configured to perform power amplification on the phase-shifted constant envelope transmit signal, to output the second transmit signal.

6.  The transmitter according to any one of claims 1 to 4, wherein the second subchannel comprises a second power amplifier and a second phase shifter that are coupled to each other, the second power amplifier is configured to perform power amplification on the constant envelope transmit signal, and the second phase shifter is configured to perform phase shifting on the power-amplified constant envelope transmit signal, to output the second transmit signal.

7.  The transmitter according to claim 5 or 6, wherein the second subchannel further comprises a second variable gain amplifier coupled to the second power amplifier and the second phase shifter, and the second variable gain amplifier is configured to adjust a gain of the second subchannel.

8. The transmitter according to any one of claims 1 to 7, wherein the power amplification of the first subchannel and the second subchannel is in a saturated output state.

9. The transmitter according to any one of claims 1 to 8, wherein the constant envelope transmit signal is a monophonic signal.

10. The transmitter according to any one of claims 1 to 9, wherein when the transmitter is used in a long-range radar, a phase difference between the first transmit signal and the second transmit signal is A; when the transmitter is used in a short-range radar, the phase difference between the first transmit signal and the second transmit signal is B; and A<B.

11. The transmitter according to any one of claims 1 to 10, wherein the first subchannel and the second subchannel have a same structure.

12. The transmitter according to any one of claims 1 to 11, wherein the signal transmitter comprises an oscillator, a phase detector, and a loop filter, the oscillator is configured to generate the constant envelope transmit signal, the phase detector is configured to input a reference signal and the constant envelope transmit signal and output a first signal related to a phase difference between the reference signal and the constant envelope transmit signal, and the loop filter is configured to filter the first signal and output the first signal to the oscillator.

13. The transmitter according to any one of claims 1 to 12, wherein the transmitter comprises the signal transmitter and a plurality of transmit channels, and each of the transmit channels comprises the first subchannel, the second subchannel, and the combiner; the transmitter further comprises a frequency multiplier and a plurality of drivers, an output end of the signal transmitter is coupled to an input end of the frequency multiplier, and an output end of the frequency multiplier is coupled to an input end of the first subchannel and an input end of the second subchannel of the plurality of transmit channels through the plurality of drivers; and for each of the transmit channels, an output end of the first subchannel and an output end of the second subchannel are coupled to an input end of the combiner, and an output end of the combiner is coupled to one of a plurality of transmit antennas.

14. A radar, comprising the transmitter according to any one of claims 1 to 13 and a receiver, wherein the receiver is configured to receive a signal that is transmitted by the transmitter and that is reflected by a target.

15. A vehicle, comprising the radar according to claim 14 and a driving mechanism.

FIG. 1

FIG. 2

FIG. 3

FIG. 4

FIG. 5

FIG. 6

FIG. 7

FIG. 8

40

402

First subchannel

404    405

401

4023    4022    4021    403

Signal
transmitter

Combiner

Second
subchannel

4033    4032    4031

41

415    414    413    412    411

ADC ← LPF ← ⊗ ← LNA ←

Target

FIG. 9

401

Reference
signal

4012    4013    4011

Phase detector → Loop filter → Oscillator

Constant envelop
transmit signal

FIG. 10

FIG. 11

FIG. 12

FIG. 13

<div align="center">**INTERNATIONAL SEARCH REPORT**</div>

| | International application No. |
|---|---|
| | **PCT/CN2020/138737** |

| A. | CLASSIFICATION OF SUBJECT MATTER |
|---|---|

H04B 7/06(2006.01)i

According to International Patent Classification (IPC) or to both national classification and IPC

| B. | FIELDS SEARCHED |
|---|---|

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC: 发射机, 雷达, 距离, 功率, 放大, 功放, 恒包络, 恒定包络, 相移, 移相, 合成, 合并, transmitter, radar, distance, power, amplification, constant envelope, phase shift, synthesis, combining

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 1813399 A (NOKIA CORPORATION) 02 August 2006 (2006-08-02) description, pages 2-4 | 1-15 |
| A | CN 110545113 A (SHANGHAI HUAWEI TECHNOLOGIES CO., LTD.) 06 December 2019 (2019-12-06) entire document | 1-15 |
| A | CN 105743832 A (NATIONAL UNIVERSITY OF DEFENSE TECHNOLOGY, PLA.) 06 July 2016 (2016-07-06) entire document | 1-15 |
| A | CN 105891783 A (SHANGHAI INSTITUTE OF MICROSYSTEM AND INFORMATION TECHNOLOGY, CHINESE ACADEMY OF SCIENCES) 24 August 2016 (2016-08-24) entire document | 1-15 |
| A | US 2018252807 A1 (URTHECAST CORP. et al.) 06 September 2018 (2018-09-06) entire document | 1-15 |

☐ Further documents are listed in the continuation of Box C.       ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 September 2021** | **27 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/138737**

| Patent document cited in search report | | | Publication date (day/month/year) | Patent family member(s) | | | Publication date (day/month/year) |
|---|---|---|---|---|---|---|---|
| CN | 1813399 | A | 02 August 2006 | EP | 1636902 | A1 | 22 March 2006 |
| | | | | WO | 2004114516 | A1 | 29 December 2004 |
| | | | | KR | 20060021290 | A | 07 March 2006 |
| | | | | US | 2004266368 | A1 | 30 December 2004 |
| | | | | ES | 2774180 | T3 | 17 July 2020 |
| CN | 110545113 | A | 06 December 2019 | WO | 2019228112 | A1 | 05 December 2019 |
| CN | 105743832 | A | 06 July 2016 | | None | | |
| CN | 105891783 | A | 24 August 2016 | | None | | |
| US | 2018252807 | A1 | 06 September 2018 | WO | 2016153914 | A1 | 29 September 2016 |
| | | | | CA | 2980920 | A1 | 29 September 2016 |

Form PCT/ISA/210 (patent family annex) (January 2015)